# EUROPEAN PATENT APPLICATION

(11) **EP 1 197 777 A1**
(43) Date of publication of application: **17.04.2002**
(21) Application number: 00402877.5
(22) Date of filing: 17.10.2000
(51) Int. Cl.: G02B 26/02

(54) **System for aligning connectors and optical devices**

(71) Applicant: Corning Incorporated, Corning, New York 14831 (US)
(72) Inventor: Brophy, Christopher Phillip, Corning, NY 14831 (US); Renvaze, Christophe, Corning, NY 14831 (US); Brun, Marc, Corning, NY 14831 (US); Cayrefourcq, Ian, Corning, NY 14831 (US)
(74) Representative: Boon, Graham Anthony

(57) **Abstract**

An optical device is provided. The optical crossbar switch (10) includes a waveguide body (12) for directing a plurality of optical signals between an input block (36) and an output block (38). The wavegudie body (12) includes a plurality of intersecting signal waveguides (22), and at least one pair of intersecting alignment waveguides (26). A reflective alignment trench (30) is formed at the intersection of the at least one pair of alignment waveguides (24) for reflecting light prior to filling the reflective alignment trench (30) with an optical matching fluid.

## Description

### BACKGROUND OF THE INVENTION

### 1. Field of the Invention

The present invention relates generally to an optical crossbar switch for a communication system. More particularly, the present invention is directed to an optical crossbar switch structure that allows arrayed fiber connectors to be efficiently aligned and attached thereto for use in an optical communication system.

### 2. Technical Background

With the successful introduction of photonic technology into the field of telecommunications, increasing attention is being focused toward complete data networks utilizing optical fibers and optical switches. As these networks have become more complex, a need has arisen for a method of attaching arrays of optical fibers to optical devices.

An example of an optical device requiring connection to arrays of optical fibers is an optical crossbar switch. An optical crossbar switch typically comprises an integrated optical circuit die and a micro electro-mechanical system or MEMS die. The integrated optical circuit die consists of a grid of waveguides embedded in an overclad layer. A trench is etched at each waveguide intersection. The MEMS die includes actuators and mirrors. The MEMS die is assembled to the integrated optical circuit die so that the mirrors are located in the etched trenches. Once the MEMS die is mated to the integrated optical circuit die the mirrors can be actuated to intercept light propagating in a specific waveguide and reflect it into an intersecting waveguide. Conversely, the mirrors may be removed from the light path in order to allow light propagating in a waveguide to continue in a straight line. In order to avoid losses and unwanted reflections when the mirrors are removed from the light path the etched trenches are filled with an fluid having an index of refraction close to or matching that of the waveguides. In circuit switching, any one of an array of input optical fibers may be connected to any one of an array of output optical fibers using a matrix of non-blocking
optical crossbar switches. The term non-blocking is used to refer to an arrangement in which any input fiber can be optically connected to any output fiber without disrupting the connection of any other input fiber with any other output fiber. Losses through an optical switch are minimized when the optical signal is maintained as a guided wave. This can be achieved in a crossbar switch where the input and output paths are channelized waveguides. Additionally, the switch crosspoints should constitute short interruptions of the intersection of input and output waveguides where some mechanism is available to direct signals from an input waveguide to an output waveguide.

After the crossbar switch is manufactured one or more arrays of optical fibers may be attached or "pigtailed" to the body of the crossbar switch. The crossbar switch designs referred to above generally require that the crossbar switch is encapsulated and filled with an optical index matching fluid for low loss at the switch crosspoints. The optical alignment and attachment or "pigtailing" of the optical fiber arrays to a crossbar switch has heretofore required a special fixture to avoid contamination by the fluid before or during attachment. Additionally, the alignment and attachment of arrays of optical fibers with respective waveguides of the optical device is a complex operation. The complexity of this operation is illustrated by consideration of a typical pigtailing procedure used with the above described optical cross bar switch.

In the typical pigtailing operation light is injected into the two outermost waveguides of one side of the grid of waveguides and the mirrors are retracted out of the way of light propagating within the waveguides. The optical fiber array block or ribbon cable is aligned on the opposite side of the optical crossbar switch by monitoring the light transmitted from the waveguides of the optical crossbar switch to the outer most waveguides of the optical fiber array block. The position of the optical fiber array block is adjusted until the intensity of the light transmitted from the waveguides of the optical crossbar switch to the outer most waveguides of the optical fiber array block reaches a certain value. The optical fiber array block is then affixed to the optical crossbar switch. This procedure requires positioning the light sources for injecting light into the waveguides of the optical crossbar switch and then positioning the optical fiber array block. Optical crossbar switches require that optical fiber array blocks be attached to both sets of intersecting waveguides forming the waveguide grid. Therefore, the above described pigtailing procedure must be completed twice.

Accordingly, it is desirable to provide a crossbar switch design and technique for pigtailing that allows the ribbon cables to be optically aligned and attached to the crossbar switch before the switch is encapsulated and filled with the optical matching fluid.

### SUMMARY OF THE INVENTION

In accordance with the teachings of the present invention, an optical crossbar switch is disclosed. The optical crossbar switch includes a waveguide body for directing a plurality of optical signals between an input block and an output block. The waveguide body includes a plurality of intersecting signal waveguides, and at least one pair of intersecting alignment waveguides. A reflective alignment trench is formed at the intersection of the at least one pair of alignment waveguides for reflecting light prior to filling the reflective alignment trench with an optical matching fluid.

It is to be understood that both the foregoing general description and the following detailed description are merely exemplary of the invention, and are intended to provide an overview or framework for understanding the nature and character of the invention as it is claimed. The accompanying drawings are included to provide a further understanding of the invention, and are incorporated in and constitute a part of this specification. The drawings illustrate various features and embodiments of the invention, and together with the description serve to explain the principles and operation of the invention.

### BRIEF DESCRIPTION OF THE DRAWINGS

The various advantages of the present invention will become apparent to one skilled in the art by reading the following specification and appended claims, and by referencing the following drawings in which:
Figure 1 is a top plan view of the optical crossbar switch in accordance with a preferred embodiment of the present invention;
Figure 2 is an enlarged isolated view of the total internal reflection (TIR) alignment trench according to one aspect of the invention;
Figure 3 is a side view of the optical crossbar switch of Figure 1;
Figure 4 is a top plan view of the optical crossbar switch in accordance with another preferred embodiment of the present invention;
Figure 5 is a top plan view of the optical crossbar switch in accordance with another preferred embodiment of the present invention;
Figure 6 is an isolated view of the trench and mirror reflective devices associated with the optical crossbar switches of the present invention; and
Figure 7 is a top plan view of the optical crossbar switch in accordance with another preferred embodiment of the present invention.
Figure 8 is a top plan view of an alternative embodiment of the present invention.

### DETAILED DESCRIPTION OF THE PREFERRED EMBODIMENTS

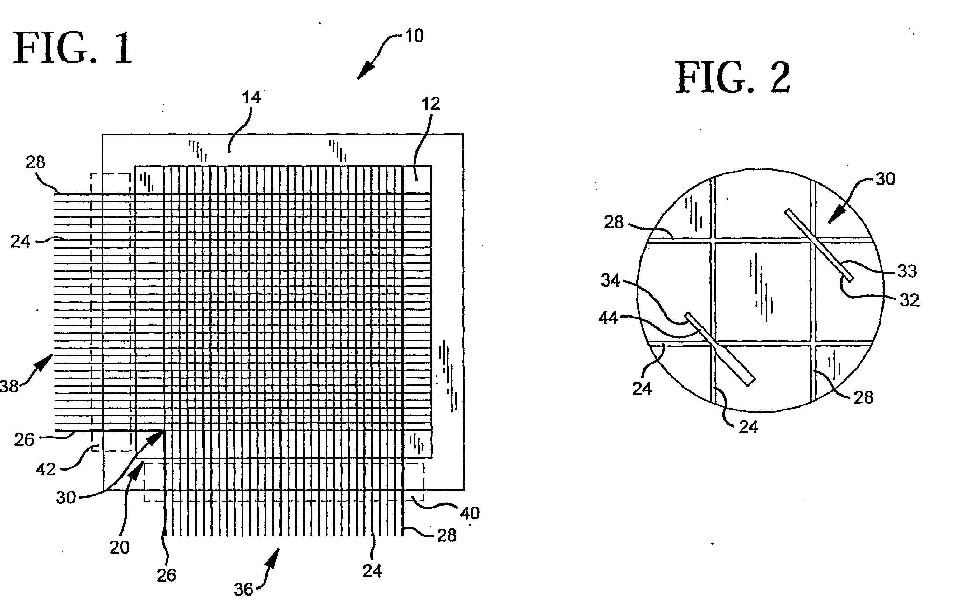

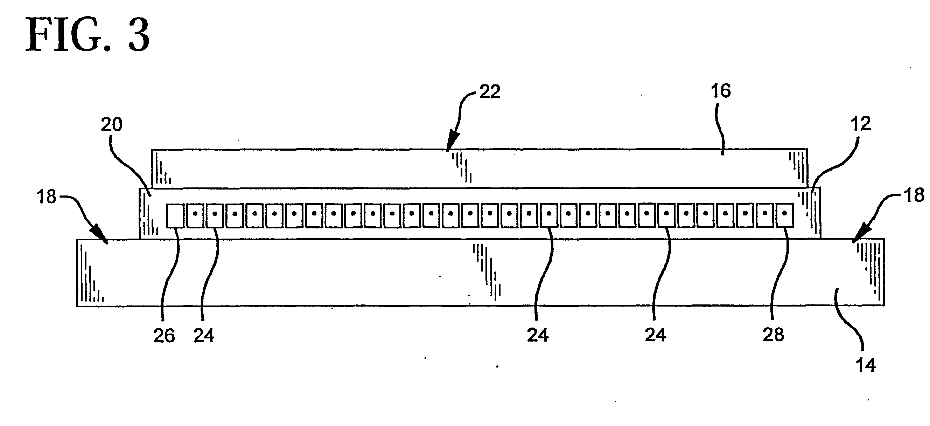

Referring now to Figures 1, 2 and 3, an optical crossbar switch 10 is disclosed in accordance with the teachings of the present invention. As shown, the optical crossbar switch 10 includes a waveguide body 12 formed on a substrate 14 using known semiconductor manufacturing techniques. Accordingly, the substrate 14 is preferably a silicon or silica substrate and the waveguide body 12 and its associated features are formed through a series of material deposition and etching processes. A mirror actuation system 16 is disposed on or near the surface of the waveguide body 12. Operation of the mirror actuation system 16 is described in greater detail below.

As shown, the waveguide body 12 is preferably square, and is dimensioned to be slightly smaller than the substrate 14 which creates a connector ledge 18 about the top perimeter surface of the substrate 14. The connector ledge 18 thus provides additional support to optical fiber array connectors 40, 42 that are secured to two sides of the crossbar switch 10 during the manufacturing process.

The waveguide body 12 includes a plurality of intersecting waveguides 22, which include a plurality of signal carrying waveguides 24, at least one pair of intersecting inside alignment waveguides 26, and at least one pair of intersecting outside alignment waveguides 28. With specific reference to Figures 1 and 2, the waveguide body 12 includes two total internal reflection (TIR) alignment trenches 30, one alignment trench 30 is located at the intersection of the outside alignment waveguides 28 (specifically shown), and a second alignment trench 30 (FIG. 1) is located at the intersection of the inside alignment waveguides 26. Each alignment trench 30 is preferably etched with the inside face 32 of the trench appropriately positioned for providing efficient reflection during alignment and pigtailing (e.g. to account for the Goos-Hanschen shift) when the alignment trench 30 is unfilled with an optical matching fluid. The alignment trench 30 also includes an outside face 33 parallel to the inside face 32. As will be appreciated, a cavity is formed between the inside face 32 and the outside face 33, which defines the TIR alignment trench 30. According to the design of the optical crossbar switch 10 and the alignment waveguides 26, 28 only two TIR alignment trenches 30 are required. As will be appreciated, the design of the optical crossbar switch 10 also allows the optical fiber array connectors 40, 42 to be optically aligned and secured to the optical crossbar switch 10 before the waveguide body 12 is sealed, preferably by encapsulation, and filled with an optical matching fluid.

The waveguide body 12 is also shown to include thirty (30) signal waveguides 24 associated with an input fiber block 36, and thirty (30) signal waveguides 24 associated with an output fiber block 38. As will be appreciated, the signal waveguides 24 as well as the alignment waveguides 26, 28 are formed at a right angle to one another. While thirty (30) signal waveguides are shown in association with the optical crossbar switch 10, one skilled in the art will readily appreciate that the teachings of the present invention apply to crossbar switches having greater or fewer than thirty signal waveguides.

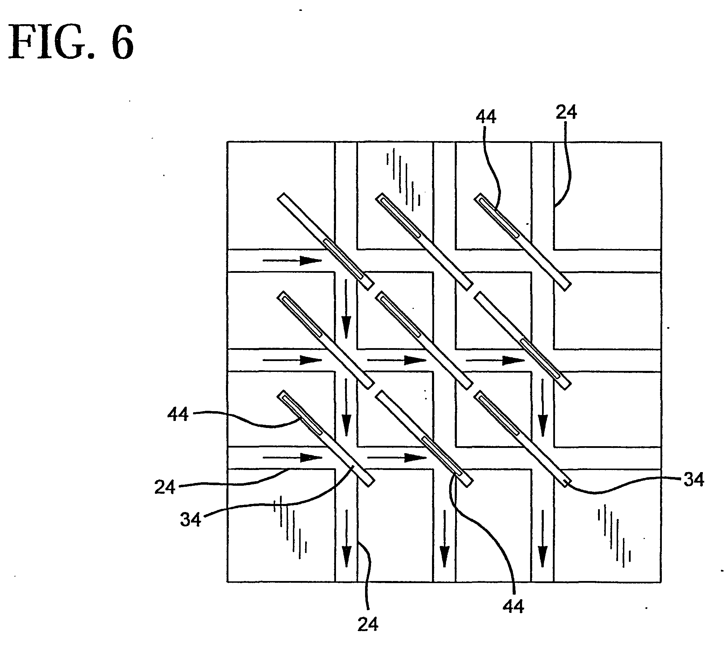

With specific reference to Figures 2 and 6, a micro-mirror trench 34 is located at the intersection of each orthogonal signal waveguide 24. Each micro-mirror trench 34 may employ either a micro-mirror immersed in an optical matching fluid, or employ TIR-based switch points with a moveable bubble in an optical matching fluid. In operation, an optical signal carried by one of the signal waveguides 24 at the input fiber block 36 can be switched to any of the signal waveguides 24 of the output fiber block 38 by actuating the appropriate mirror 44 or other reflective structure into the intersection of the signal waveguides 24. The actuation of the appropriate reflective device 44 is controlled by the mirror actuation system 16. As is known, the mirror actuation can be achieved in a variety of ways including micro electromechanical system (MEMS) actuators, of electrostatic, thermal or electromagnetic type.

Referring back to Figures 1 and 2 the alignment waveguides 26, 28 along with the TIR alignment trenches 30 at the waveguide intersection allow signals from the ends of the input fiber block 36 to be routed to the ends of the output fiber block 38 at a right angle. As will be appreciated, this feature of the optical crossbar switch 10 allows the complete pigtailing with optical fiber array connectors 40, 42 to the crossbar switch 10 while monitoring only optical signals transmitted along the alignment waveguides 26, 28. Each optical fiber array connector 40, 42 includes two alignment waveguides 100, 102. One alignment waveguide 100 is located at one end of the optical fiber array and the other alignment waveguide 102 is located at the other end of the optical fiber array. The signal carrying optical waveguides are positioned between the two alignment waveguides 100, 102. Because the TIR alignment trenches 30 reflect light without the actuation of a mirror, and without contact with an optical matching fluid, the design of the present invention permits the crossbar switch 10 to be pigtailed in a dry state. This allows the pigtailing of the optical crossbar switch 10 to be completed before optical matching fluid is introduced into the optical crossbar switch 10. The design of the present invention also allows the device to be completely pigtailed without removal of the optical crossbar switch 10 from a pigtailing fixture.

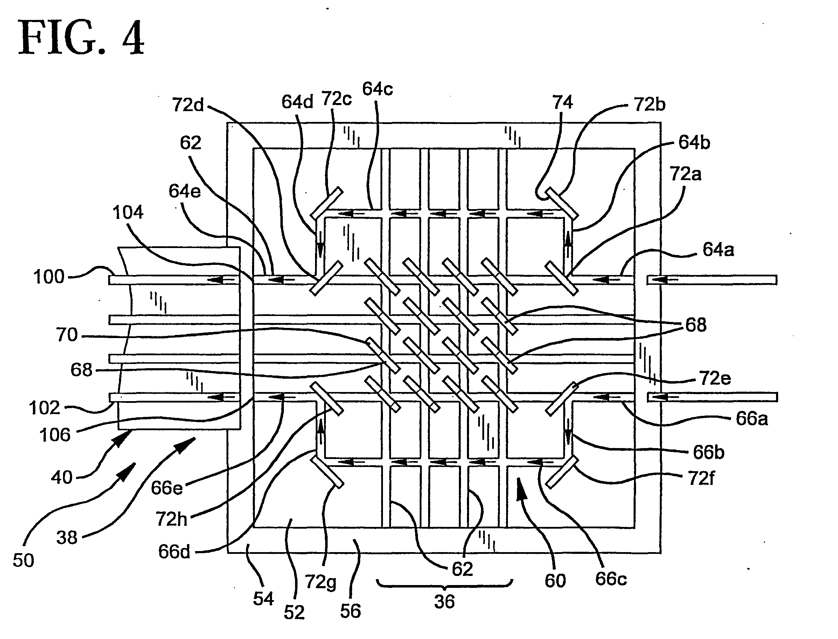

Turning now to Figure 4, an optical crossbar switch 50 is shown according to the teachings of another preferred embodiment of the invention. The optical crossbar switch 50 also includes a waveguide body 52 formed on a substrate 54 using known semiconductor manufacturing techniques. Accordingly, the substrate 54 is preferably a silicon or silica substrate and the waveguide body 52 is formed through a series of material deposition and etching processes. As described above, a mirror actuation system (not shown) is disposed on or near the surface of the waveguide body 52.

As shown, the waveguide body 52 is also preferably square, and is dimensioned to be slightly smaller than the substrate 54 which creates a connector ledge 56 about the top perimeter surface of the substrate 54. As will be appreciated, the connector ledge 56 provides additional support to optical fiber array connectors 40, 42 that are secured to the optical crossbar switch 50 during the manufacturing process.

The waveguide body 52 includes a plurality of intersecting waveguides 60, which include signal carrying waveguides 62, a first alignment waveguide circuit 64, and a second alignment waveguide circuit 66. The first alignment waveguide circuit 64 includes five (5) optical waveguides 64a, 64b, 64c, 64d, 64e. The second alignment waveguide circuit 66 includes five (5) optical waveguides 66a, 66b, 66c, 66d, 66e. The waveguide body 52 is shown to include four (4) signal waveguides 62 associated with an input fiber block 36 and four (4) signal waveguides 62 associated with an output fiber block 38. As will be appreciated, the signal waveguides 62 are formed at a right angle to one another. A micro-mirror trench 68 is located at the intersection of each orthogonal signal waveguide 62. Each of the reflection trenches 68 preferably employs a micro-mirror 70 immersed in an optical matching fluid. In operation, an optical signal carried by one of the signal waveguides 62 at the input fiber block 36 can be switched to any of the signal waveguides 62 of the output fiber block 38 by actuating the micro-mirror 70 or other reflective structure into the intersection of the signal waveguides 62. The actuation of the reflective device 70 is controlled by a mirror actuation system (not specifically shown), such as a MEMS actuator as described above.

With continued reference to Figure 4, the waveguide body 52 includes a plurality of total internal reflection (TIR) alignment trenches 72 etched therein. More specifically, the first alignment waveguide circuit 64 includes four TIR alignment trenches 72a, 72b, 72c, 72d, and the second alignment waveguide circuit 66 also includes four TIR alignment trenches 72e, 72f, 72g, 72h. Each alignment trench 72 is preferably etched with the inside face 74 of the trench appropriately positioned for providing efficient reflection of an optical signal traveling along either the first alignment waveguide circuit 64 or the second waveguide alignment circuit 66. As will be appreciated, the first and second alignment waveguide circuits 64, 66 provide a derivative alignment circuit which bypasses the micro-mirror trenches 68 during alignment and pigtailing of the optical fiber array connectors 40, 42. In this way the need to include additional alignment waveguides in the optical fiber array connectors is removed.

In the pigtailing process the optical fiber array connector 40 is attached to the optical crossbar switch 50. The alignment waveguides 100, 102 of the optical fiber array connector 40 are optically connected to photodetectors (not shown) that measure the intensity of light in each of the alignment waveguides 100, 102. The optical fiber array connector 40 is passively aligned with the optical crossbar switch 50.

Light is injected into the first and second alignment waveguide circuits 64, 66. In the first alignment waveguide circuit 64, the light travels through an alignment waveguide 64a until it reaches an alignment trench 72a. The alignment trench 72a directs the light into an alignment waveguide 64b by total internal reflection. The light then travels through the alignment waveguide 64b until it reaches an alignment trench 72b that directs the light into another alignment waveguide 64c by total internal reflection. The light then travels through this alignment waveguide 64c until it reaches an alignment trench 72c that directs the light into another alignment waveguide 64d by total internal reflection. The light then travels through this alignment waveguide 64d until it reaches an alignment trench 72d that directs the light into another alignment waveguide 64e by total internal reflection. This alignment waveguide 64e terminates at lightport 104.

In the second alignment waveguide circuit 66, the light travels through an alignment waveguide 66a until it reaches an alignment trench 72e. The alignment trench 72e directs the light into an alignment waveguide 66b by total internal reflection. The light then travels through the alignment waveguide 66b until it reaches an alignment trench 72f that directs the light into another alignment waveguide 66c by total internal reflection. The light then travels through this alignment waveguide 66c until it reaches an alignment trench 72g that directs the light into another alignment waveguide 66d by total internal reflection. The light then travels through this alignment waveguide 66d until it reaches an alignment trench 72h that directs the light into another alignment waveguide 66e by total internal reflection. This alignment waveguide 66e terminates at lightport 106.

The alignment waveguides 100, 102 of the optical fiber array connector 40 are located to facilitate alignment with the two light ports 104, 106. The remainder of the optical waveguides in the optical fiber array connector 40 are located to engage in optical communication with the signal waveguides 62 of the optical crossbar switch 50 when the optical fiber array connector 40 is properly aligned with the lightports 104, 106.

Light leaving the lightports 104, 106 is received by the alignment waveguides 100, 102 of the optical fiber array connector 40. The optical fiber array connector 40 is moved until the intensity of the light in the alignment waveguides 100, 102 reaches a predetermined value. When intensity of the light in the alignment waveguides 100, 102 reaches this predetermined value the optical fiber array connector 40 is properly aligned with the signal carrying waveguides 62 of the optical crossbar switch 50. The optical fiber array connector 40 is then mechanically coupled to the optical crossbar switch 50 in order to maintain the optical alignment previously achieved.

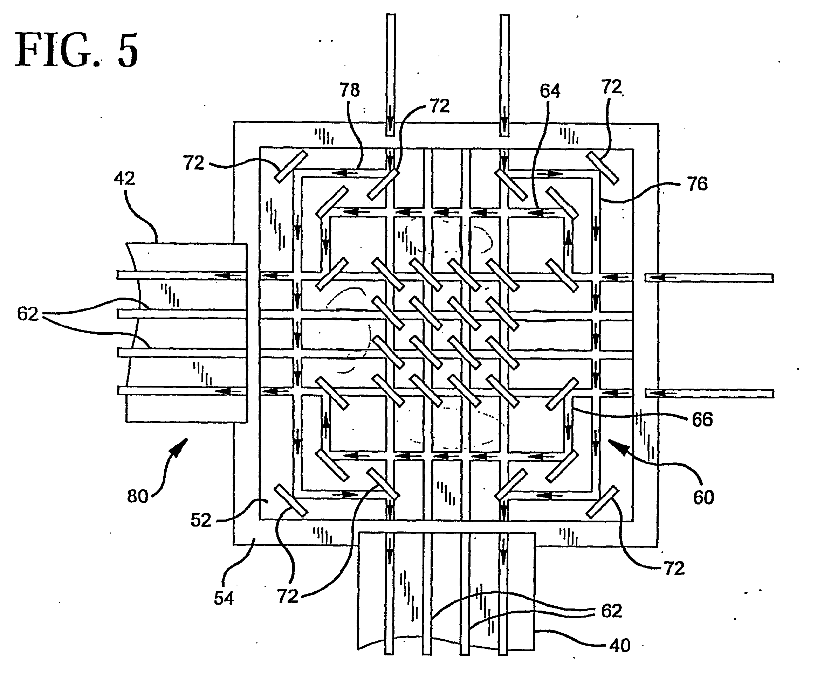

Referring now to Figure 5, an optical crossbar switch 80 is shown according to the teachings of another preferred embodiment of the invention. As shown, the optical crossbar switch 80 also includes a waveguide body 52 formed on a substrate 54 using known semiconductor manufacturing techniques. The waveguide body 52 also includes a plurality of intersecting waveguides 60, which include signal carrying waveguides 62, a first alignment waveguide circuit 64, a second alignment waveguide circuit 66, a third alignment waveguide circuit 76, and a fourth alignment waveguide circuit 78. As shown, each of the alignment waveguide circuits 64, 66, 76, 78 include four (4) alignment trenches 72 which are used for reflecting an optical signal and bypassing the matrix of micro-mirror trenches 68 during alignment and pigtailing of the arrayed fiber connectors 40, 42. Attachment of the optical fiber array connectors 40, 42 is accomplished as described above. The first and second alignment waveguide circuits 64, 66 are used to actively align one optical fiber array connector 42 and the third and fourth waveguide alignment circuits 76, 78 are used to actively align the other optical fiber array connector 40.

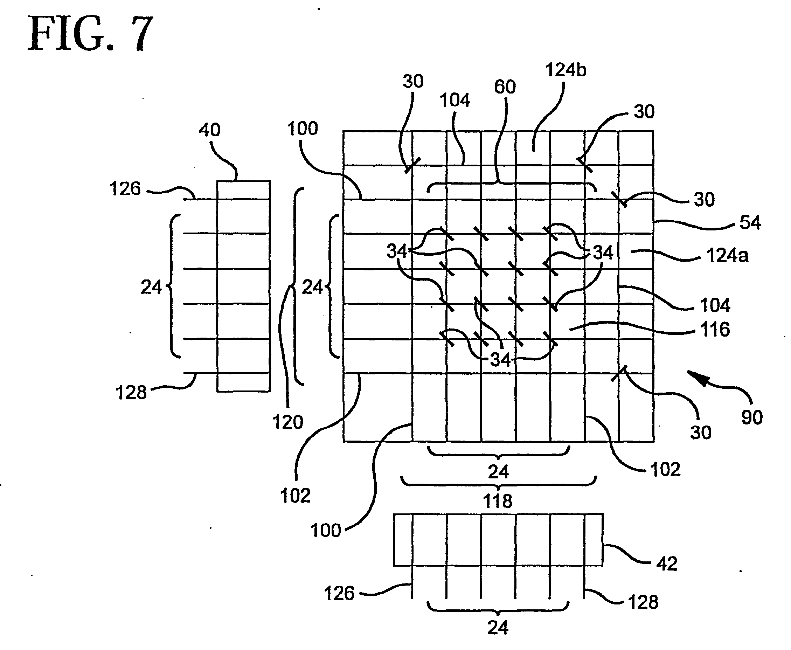

With reference to Figure 7, an optical crossbar switch 90 is shown according to the teachings of another preferred embodiment of the invention. The optical crossbar switch 90 also includes a switch fabric 116 formed on a substrate 54 using known semiconductor manufacturing techniques. The switch fabric also includes a plurality of intersecting waveguides 60 which include signal carrying waveguides 24, a first u-shaped alignment waveguide circuit 124a, and a second u-shaped alignment waveguide circuit 124b. As shown, each of the u-shaped alignment waveguide circuits 124a, 124b include two TIR alignment trenches 30 which are used for reflecting an optical signal and bypassing the matrix of micro-mirror trenches 34 during alignment and pigtailing of the optical fiber array connectors 40, 42. As one skilled in the art will readily appreciate, each of the alignment waveguide circuits 124a, 124b allow the appropriate arrayed fiber connector 40, 42 to be self aligned along one side of the waveguide body 52.

The switch fabric 116 consists of a number of intersecting signal carrying waveguides 24. The signal carrying waveguides 24 are arranged in a grid-like pattern. At each intersection of two signal carrying waveguides 24 there is a micromirror trench 34 for housing a reflective device. The optical crossbar switch 10 has an input portion 118 and output portion 120. The input and output portions 118, 120 allow the optical crossbar switch 10 to engage in optical communications with an optical communication system (not shown). While the term input/output portion are used to refer to sections of the optical crossbar switch 10, these terms should not be considered limiting as optical signals may travel in both directions along the signal carrying waveguides 24 that make up the input 188 and output 120 portions of the optical crossbar switch 10. For the optical crossbar switch 10 of this embodiment of the present invention, to function as part of an optical communication system, it must be connected into an optical communication system. The optical crossbar switch 10 is connected to an optical communication system using optical fiber array connectors 40, 42. The optical fiber array connector 40 has a number of signal carrying waveguides 24 and two alignment waveguides 126, 128. The optical fiber array connector 40 is configured to engage in optical communication with the output portion 120 of the optical crossbar switch 10. Similarly, the optical fiber array connector 42 is configured to engage in optical communication with the input portion 118 of the optical crossbar switch 10. The optical fiber array connector 42 has a number of signal carrying waveguides 24 and two alignment waveguides 126, 128.

In addition to the switch fabric 116, the optical crossbar switch 10 includes two alignment circuits 124. The optical alignment circuits 124 consist of an alignment waveguide 100, a transverse waveguide 104 and another alignment waveguide 102 and two total internal reflective alignment trenches 30. The alignment waveguide 100 is configured to engage in optical communication with the alignment waveguide 126 of the optical fiber array connector 42. Similarly, the alignment waveguide 102 is configured to engage in optical communication with the alignment waveguide 128 of the optical fiber array connector 42.

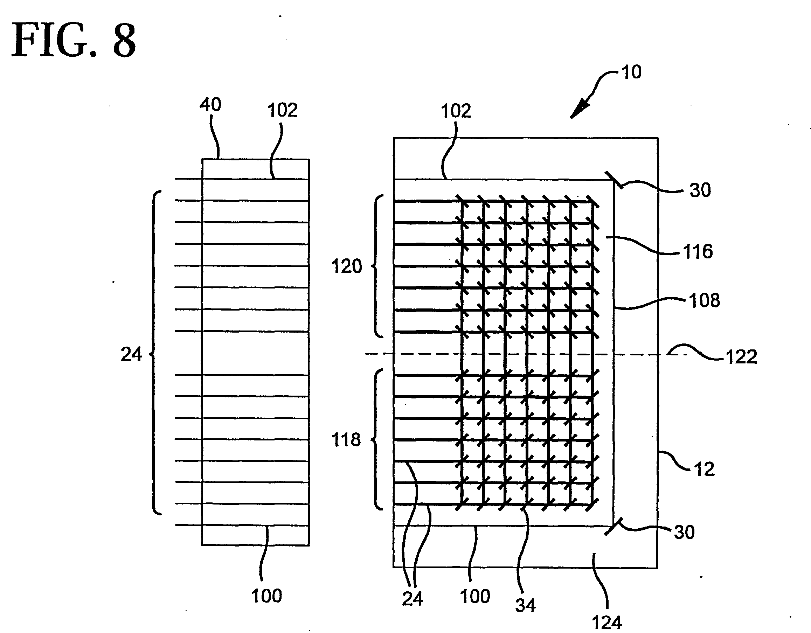

In order to couple the optical fiber array connectors 40, 42 to the output and input portions 120, 118 of the optical crossbar switch 10 so that the optical crossbar switch may function as part of an optical communication system it is necessary to minimize the insertion losses between the signal carrying waveguides 24 of the optical fiber array connectors 40, 42 and the signal carrying waveguides 24 of the optical crossbar switch 10. The location of the alignment circuits 124 as shown in Figure 8 allow a signal optical fiber array connector 40 to be connected or pigtailed to the optical crossbar switch 10. An example of how this accomplished is given by considering the attachment of the optical fiber array connector 40 to the output portion 120 of the optical crossbar switch 10. A light source is connected to the alignment waveguide 126 of the optical fiber array connector 40, and a photodetector is connected to the alignment waveguide 128 of the optical fiber array connector 40. The optical fiber array connector 40 is then brought into close proximity to the optical crossbar switch 10. Using passive alignment techniques, that are known to those versed in the art, the optical fiber array connector 40 is positioned such that alignment waveguides 126, 128 of the optical fiber array connector 40 can engage in optical communication with the alignment waveguides 100, 102 of the alignment circuit 124a of the optical crossbar switch 10.

With reference to Figure 8, an optical crossbar switch 10 is shown according to the teachings and other preferred embodiment of the invention. The optical crossbar switch 10 includes a waveguide body 12 formed on a substrate 14 using semiconductor manufacturing techniques known to those versed in the art. The optical waveguide body 14 also includes a plurality of intersecting signal carrying waveguides 24. The plurality of intersecting signal carrying waveguides 24 form a switch fabric 116. The switch fabric 116 includes a number of input portion 118 having a number of signal carrying waveguides 24 located and an output portion 120 having an equal number of signal carrying waveguides 24. The input and output portions 118, 120 of the switch fabric 116 are symmetric about the line 122. Thus, only a single optical fiber array connector 40 is required to connect the optical crossbar switch 10 to an optical communication system. An optical signal introduced into any one of the input waveguides 118 may be directed to any one of the output waveguides 120 by using a mirror device located in the micromirror trenches 34. The operational details of the mirror devices located in the micromirror trenches 34 are detailed above. Also included in the substrate 14 is an alignment circuit 124. The alignment circuit 124 includes an alignment waveguide 100 for receiving light, a reflective trench 30 that operates on total internal reflection for directing light introduced into the alignment waveguide 100 into the waveguide 108. The waveguide 108 that receives the light from the alignment waveguide 100 is at approximately a 90° angle to the alignment waveguide 100. The total internal reflection alignment trench 30 has been detailed above. The light propagates along the waveguide 108 until it reaches a second alignment trench 30, which directs the light into an alignment waveguide 102. In pigtailing operations, a optical fiber array connector 40 would be joined to the optical cross-bar switch 10. In the present embodiment of the invention the optical fiber array connector 40 includes an array of signal carrying waveguides 24 and two alignment waveguides 100, 102. The two alignment waveguides 100, 102 are located at the extreme ends of the optical fiber array, preferably the signal carrying waveguides 24 form a linear array located between the two alignment waveguides 100, 102. In a pigtailing operation a light source is connected to the first alignment waveguide 100 of the optical fiber array connector 40 and a photodetector is connected to the second alignment waveguide 102 of the optical fiber array connector 40. This position of the alignment waveguides 100, 102 of the optical fiber array connector 40 is such that when the optical axis of these waveguides 100, 102 are aligned with the optical axis of the alignment waveguides 100, 102 of the optical cross-bar switch 10, the signal carrying waveguides 24 of the optical waveguide array connector 40 are aligned with the input waveguides 118 and output waveguides 120 of the optical cross-bar switch 10, thus allowing the signal carrying waveguides 24 of the optical fiber array connector 40 to engage in optical communication with the optical cross-bar switch 10. Alignment of the signal carrying waveguides 24 of the optical fiber array connector 40 would be input waveguides 118 and output waveguides 120 of the optical crossbar switch 10 is accomplished by first passively aligning the respective alignment waveguides 100, 102 of the optical fiber array connector 40 and the optical crossbar switch 10. Light is introduced into the alignment waveguide 100 of the optical fiber array connector 40, at the same time the intensity of light corresponding to the waveband of the light injected into the alignment waveguide 100 present in the second alignment waveguide 102 is monitored by the photodetector. The position of the optical fiber array connector 40 is adjusted until the light reaching the photodetector connected to the alignment waveguide 102 of the optical fiber array connector 40 reaches a preselected value. Typically the value of the light intensity is selected to provide minimal insertion losses between the input and output waveguides 118, 120 of the optical crossbar switch 10 and the signal carrying waveguides 24 of the optical fiber array connector 40.

The foregoing discussion discloses and describes exemplary embodiments of the present invention. One skilled in the art will readily recognize from such discussion, and from the accompanying drawings and claims, that various changes, modifications and variations can be made therein without departing from the spirit and scope of the invention as defined in the following claims.

## Claims

1. An optical device comprising:
an integrated optical circuit; and
a first alignment circuit, wherein said alignment circuit facilitates the active alignment of an optical fiber array connector with said signal carrying circuit.

2. The optical device of claim 1 wherein said alignment circuit comprises::
a first alignment waveguide;
a second alignment waveguide intersecting said first alignment waveguide;
a first alignment trench disposed at the intersection of said first and second alignment waveguides, said first alignment trench configured to direct an optical signal propagating in said first alignment waveguide into said second alignment waveguide;
a third alignment waveguide intersecting said second alignment waveguide wherein said third alignment waveguide is substantially parallel to said first alignment waveguide; and
a second alignment trench disposed at the intersection of said second and third alignment waveguides, said second alignment trench configured to direct an optical signal propagating in second alignment waveguide into said third alignment waveguide.

3. The optical device of claim 1 further comprising:
a second alignment circuit wherein said second alignment circuit facilitates the active alignment of an optical fiber array connector with said signal carrying circuit.

4. An optical device comprising:
an optical waveguide array block having a first plurality of optical waveguides;
a substrate,
an optical circuit disposed on said substrate, said optical circuit having a second plurality of optical waveguides; and
an alignment optical circuit disposed on said substrate, wherein said alignment optical circuit propagates light used in aligning at least one of said first plurality of optical waveguides with at least one of said second plurality of optical waveguides.

5. The optical device of claim 4 wherein said optical circuit comprises an optical crossbar switch.

6. The optical device of claim 4 wherein said alignment optical circuit comprises:
an input port;
an output port; and
an optical waveguide coupled to said input port and to said output port so that light injected into said input port is emitted from said output port.

7. The optical device of claim 6 wherein said optical waveguide comprises:
an input optical waveguide couple to said input port;
an output optical waveguide coupled to said output port;
a transverse optical waveguide disposed to intersect both said input optical waveguide and said output optical waveguide;
a first alignment trench disposed at the intersection of said input optical waveguide and said transverse optical waveguide, wherein said first alignment trench directs light propagating in said input optical waveguide into said transverse optical waveguide; and
a second alignment trench disposed at the intersection of said transverse optical waveguide and said output optical waveguide, wherein said second alignment trench directs light propagating in said transverse optical waveguide into said output optical waveguide.

8. An optical device comprising:
a first input alignment waveguide;
a first output alignment waveguide substantially orthogonal to and intersecting said first input alignment waveguide;
a first reflective alignment trench disposed to direct light from said first input alignment waveguide into said first output alignment waveguide, wherein the light is directed into said first output alignment waveguide by total internal reflection;
a second input alignment waveguide spaced apart from said first input alignment waveguide;
a second output alignment waveguide substantially orthogonal to and intersecting said second input alignment waveguide; and
a second reflective alignment trench disposed to direct light from said second input alignment waveguide into said second output alignment waveguide, wherein the light is directed into said second output alignment waveguide by total internal reflection.

9. An optical crossbar switch comprising:
a waveguide body for directing a plurality of optical signals between an input block and an output block, the waveguide body including a plurality of intersecting signal waveguides, and at least one pair of intersecting alignment waveguides; and
a reflective alignment trench formed at the intersection of the at least one pair of alignment waveguides for reflecting light prior to filling the reflective alignment trench with an optical matching fluid.

10. The optical crossbar switch of Claim 9 wherein the alignment trench includes a first face and a second face disposed parallel to the first face.

11. The optical crossbar switch of Claim 10 wherein said first face and said second face define a cavity.

12. The optical crossbar switch of Claim 9 wherein the alignment trench is etched into the waveguide body.

13. The optical crossbar switch of Claim 9 further including an optical fiber array coupled to said waveguide body.

14. The optical crossbar switch of Claim 11 wherein said at least one pair of intersecting alignment waveguides are used to optically align said optical fiber array with the waveguide body.

15. The optical crossbar switch of Claim 9 wherein the reflective alignment trench becomes non-reflective when filled with an optical matching fluid.

16. An optical crossbar switch comprising:
a substrate;
a waveguide body formed on the substrate, the waveguide body including a plurality of intersecting signal waveguides, and at least one pair of intersecting alignment waveguides; and
a reflective alignment trench formed at the intersection of the at least one pair of alignment waveguides for reflecting light prior to filling the reflective alignment trench with an optical matching fluid.

17. The optical crossbar switch of Claim 16 wherein the alignment trench includes a first face and a second face disposed parallel to the first face.

18. The optical crossbar switch of Claim 16 wherein the alignment trench is etched into the waveguide body.

19. The optical crossbar switch of Claim 16 further including an optical fiber array optically coupled to the waveguide body.

20. The optical crossbar switch of Claim 19 wherein the pair of intersecting alignment waveguides are used in optically aligning the optical fiber array with the waveguide body.

21. The optical crossbar switch of Claim 16 wherein the reflective alignment trench is filled with an optical index matching fluid that renders the reflective alignment trench non-reflective to certain wavebands of light.

22. An optical crossbar switch comprising:
a substrate;
a waveguide body formed on the substrate, the waveguide body including a plurality of intersecting signal waveguides, and the waveguide body including a reflecting device disposed at an intersection of each of the plurality of signal waveguides.;
a first pair of intersecting alignment waveguides formed in the waveguide body;
a second pair of intersecting alignment waveguides formed in the waveguide; and
a reflective alignment trench formed at the intersection of each of the first and second pair of alignment waveguides for reflecting light prior to filling the reflective alignment trench with an optical matching fluid, the reflective alignment trench including a first face and a second face disposed parallel to the first face.

23. The optical crossbar switch of Claim 22 further including a pair of optical fiber arrays connected to the waveguide body, wherein the first and second pair of intersecting alignment waveguides are used for optically aligning the pair of ribbon cables with the waveguide body.

24. An optical crossbar switch comprising:
a switch fabric configured for optical communication with a plurality of input optical waveguides and a plurality of output optical waveguides; and
an alignment optical circuit disposed so as to not interfere with optical signals
